(19) Europäisches Patentamt
European Patent Office
Office européen des brevets

(11) **EP 3 331 155 A1**

(12) **EUROPEAN PATENT APPLICATION**

(43) Date of publication:
**06.06.2018 Bulletin 2018/23**

(51) Int Cl.:
**H02P 21/26** *(2016.01)*

(21) Application number: **17204112.1**

(22) Date of filing: **28.11.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.11.2016 JP 2016232306**

(71) Applicant: **MITSUBISHI HEAVY INDUSTRIES
THERMAL SYSTEMS, LTD.
Tokyo 108-8215 (JP)**

(72) Inventors:
• **TAKEUCHI, Hiroyuki
TOKYO, 108-8215 (JP)**
• **KANIE, Tetsuo
TOKYO, 108-8215 (JP)**
• **YOSHIDA, Junichi
TOKYO, 108-8215 (JP)**

(74) Representative: **Cabinet Beau de Loménie
158, rue de l'Université
75340 Paris Cedex 07 (FR)**

(54) **MOTOR CONTROL DEVICE, MOTOR CONTROL METHOD, PROGRAM, AND PHASE ADJUSTMENT METHOD**

(57)     A motor control device is provided that is capable of minimizing a malfunction such as a current distortion, an overcurrent abnormality, a stepping out, or the like by appropriately compensating for a deviation of a motor axis position. A motor control device (1) for controlling a motor (M) through an inverter (2) includes a vector control unit (10) configured to receive a command value for a rotation frequency and a detection value of a motor current and output a command value for an inverter output voltage based on vector control, a detected power calculation unit (12) configured to calculate detected power of the motor on the basis of the detection value of the motor current and the command value for the inverter output voltage, an estimated power calculation unit (11) configured to calculate estimated power of the motor on the basis of the command value for the rotation frequency, the detection value of the motor current, and a predefined motor constant, an output voltage compensation unit (15) configured to adjust a phase of the inverter output voltage so that a ratio of the detected power to the estimated power matches a predetermined target value, and a target value change unit configured to change the target value.

FIG. 1

**Description**

[Technical Field]

The present invention relates to a motor control device, a motor control method, a program, and a phase adjustment method.

[Background Art]

Generally, in vector control of a motor using an inverter, an output voltage of an inverter is calculated using a previously determined motor constant and a current vector (a magnetic flux current component and a torque current component) is controlled (see, for example, Patent Literature 1).
Also, in the field of sensorless vector control in which a sensor for detecting a motor axis position, a motor axis rotation frequency (a rotation position or a rotation speed of a rotor), or the like is not included, technology for estimating the rotation speed and the rotation position of the rotor from a detection value of a motor current corresponding to a command value for an inverter output voltage is known.

[Citation List]

[Patent Literature]

[Patent Literature 1]
Japanese Unexamined Patent Application, First Publication No. 2007-312521

[Summary of Invention]

[Technical Problem]

In the case of the sensorless vector control described above, a deviation may occur between a motor axis position estimated by a CPU (a microcomputer) and an actual motor axis position. One of causes of this phenomenon is that a motor inductance, which is one of motor constants, decreases during a high-load operation in which the motor becomes saturated with a magnetic flux and a deviation from the motor inductance pre-recorded on the CPU (the microcomputer) occurs.
Specifically, because the actual motor inductance is smaller than the motor inductance (the motor inductance recorded in the CPU) used for vector control calculation due to the magnetic flux saturation, a torque actually output from the motor is smaller than a torque assumed by the CPU. Therefore, a motor axis position is behind the motor axis position estimated by the CPU.
On the other hand, the CPU issues a command for the inverter output voltage on the basis of only its own estimation result. Thus, when the deviation between the motor axis position estimated by the CPU and the actual motor axis position becomes large, a malfunction such as a current distortion, an overcurrent abnormality, a stepping out, or the like may occur.
To solve this problem, a countermeasure of ascertaining an actual degree of falling behind of the motor axis position and delaying the phase of the inverter output voltage in accordance with the degree of the delay is considered. However, on the premise that a sensor capable of detecting the motor axis position has not been originally mounted, it is impossible to recognize that the motor axis position is delayed and an amount of delay.
In addition, the degree of falling behind of the motor axis position varies according to load conditions of the motor, environmental conditions, variations in characteristics, and the like. Thus, it is difficult to compensate for a deviation of the motor axis position through control for shifting the phase of the inverter output voltage by a fixed amount.
The present invention has been made in view of the above-described problems and an objective of the present invention is to provide a motor control device, a motor control method, a program, and a phase adjustment method capable of minimizing a malfunction such as a current distortion, an overcurrent abnormality, a stepping out, or the like by appropriately compensating for a deviation of a motor axis position.

[Solution to Problem]

According to a first aspect of the present invention, a motor control device is a motor control device for controlling a motor through an inverter, the motor control device including: a vector control unit configured to receive a command value for a rotation frequency and a detection value of a motor current and output a command value for an inverter output voltage based on vector control; a detected power calculation unit configured to calculate detected power of the motor on the basis of the detection value of the motor current and the command value for the inverter output voltage; an estimated power calculation unit configured to calculate estimated power of the motor on the basis of the command value for the rotation frequency, the detection value of the motor current, and a predefined motor constant; an output voltage compensation unit configured to adjust a phase of the inverter output voltage so that a ratio of the detected power to the estimated power matches a predetermined target value; and a target value change unit configured to change the target value.

Also, according to a second aspect of the present invention, the motor control device further includes: an abnormality detection unit configured to detect an abnormality, wherein the target value change unit changes the target value if the abnormality detection unit detects the abnormality.

Also, according to a third aspect of the present invention, the target value change unit changes the target value to a large value if an amount of compensation indicating a degree to which a phase of the inverter output voltage is delayed in the output voltage compensation unit is large when the abnormality is detected and changes the target value to a small value if the amount of compensation is small.

Also, according to a fourth aspect of the present invention, the target value change unit changes the target value so that the detection value of the motor current is minimized.

Also, according to a fifth aspect of the present invention, a motor control method is a motor control method of controlling a motor through an inverter, the motor control method including: a vector control step of receiving a command value for a rotation frequency and a detection value of a motor current and outputting a command value for an inverter output voltage based on vector control; a detected power calculation step of calculating detected power of the motor on the basis of the detection value of the motor current and the command value for the inverter output voltage; an estimated power calculation step of calculating estimated power of the motor on the basis of the command value for the rotation frequency, the detection value of the motor current, and a predefined motor constant; an output voltage compensation step of adjusting a phase of the inverter output voltage so that a ratio of the detected power to the estimated power matches a predetermined target value; and a target value change step of changing the target value.

Also, according to a sixth aspect of the present invention, a program causes a computer of a motor control device for controlling a motor through an inverter to function as: a vector control unit configured to receive a command value for a rotation frequency and a detection value of a motor current and output a command value for an inverter output voltage based on vector control; a detected power calculation unit configured to calculate detected power of the motor on the basis of the detection value of the motor current and the command value for the inverter output voltage; an estimated power calculation unit configured to calculate estimated power of the motor on the basis of the command value for the rotation frequency, the detection value of the motor current, and a predefined motor constant; an output voltage compensation unit configured to adjust a phase of the inverter output voltage so that a ratio of the detected power to the estimated power matches a predetermined target value; and a target value change unit configured to change the target value.

Also, according to a seventh aspect of the present invention, a phase adjustment method is a phase adjustment method of adjusting a phase of an inverter output voltage, the phase adjustment method including: at least one of a step of delaying a phase by adding a predetermined amount of compensation to a command value for the inverter output voltage during a half-cycle period in which the inverter output voltage increases and subtracting the amount of compensation from the command value for the inverter output voltage during a half-cycle period in which the inverter output voltage decreases; and a step of advancing a phase by subtracting a predetermined amount of compensation from a command value for the inverter output voltage during a half-cycle period in which the inverter output voltage increases and adding the amount of compensation to the command value for the inverter output voltage during a half-cycle period in which the inverter output voltage decreases.

[Advantageous Effects of Invention]

According to the above-described motor control device, motor control method, program, and phase adjustment method, it is possible to minimize a malfunction such as a current distortion, an overcurrent abnormality, a stepping out, or the like by appropriately compensating for a deviation of a motor axis position.

[Brief Description of Drawings]

Fig. 1 is a diagram illustrating the overall configuration of a motor control device according to a first embodiment.
Fig. 2 is a diagram illustrating a functional configuration of a vector control unit according to the first embodiment.
Fig. 3 is a first diagram illustrating a function of an output voltage compensation unit according to the first embodiment.

Fig. 4 is a second diagram illustrating a function of the output voltage compensation unit according to the first embodiment.

Fig. 5 is a diagram illustrating a processing flow of the output voltage compensation unit according to the first embodiment.

Fig. 6 is a diagram illustrating a phase adjustment process of the output voltage compensation unit according to the first embodiment.

Fig. 7 is a diagram illustrating the overall configuration of a motor control device according to a second embodiment.

Fig. 8 is a diagram illustrating a processing flow of a target value change unit according to the second embodiment.

Fig. 9 is a diagram illustrating the overall configuration of a motor control device according to a third embodiment.

[Description of Embodiments]

<First embodiment>

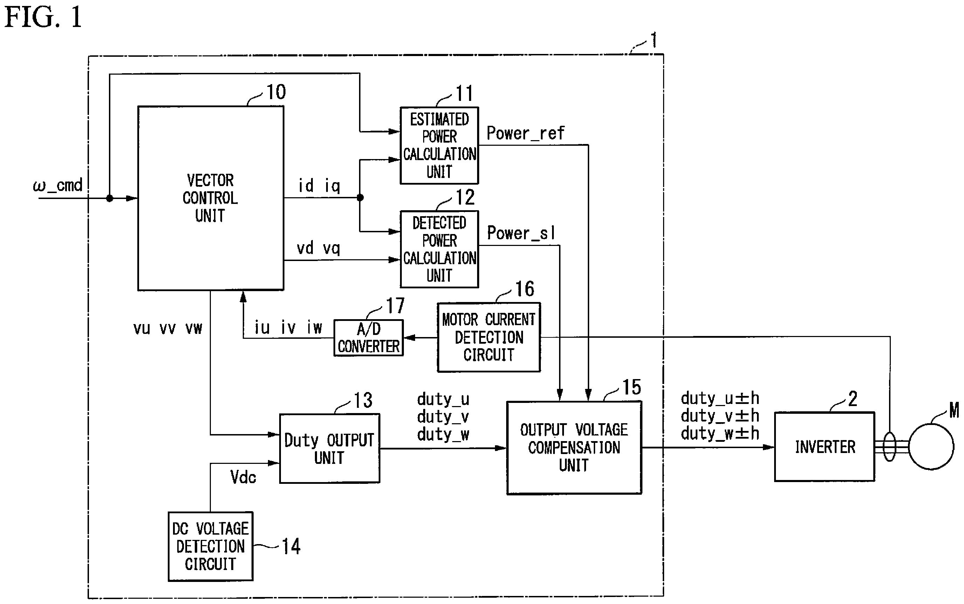

Hereinafter, a motor control device according to a first embodiment will be described with reference to Figs. 1 to 6.

(Overall configuration of motor control device)

Fig. 1 is a diagram illustrating the overall configuration of a motor control device according to the first embodiment.

As illustrated in Fig. 1, the motor control device 1 is a motor control device configured to control a motor M through an inverter 2. In the first embodiment, the motor control device 1 is, for example, a CPU (a microcomputer) or the like, and operates in accordance with a prerecorded program, thereby exhibiting various types of functions described below.

Also, the inverter 2 is a generally known inverter circuit, and receives a duty command value based on pulse width modulation (PWM) control from the motor control device 1 and outputs an alternating current (AC) voltage (an inverter output voltage) according to the duty command value to the motor M.

The motor control device 1 includes a vector control unit 10, an estimated power calculation unit 11, a detected power calculation unit 12, a duty output unit 13, a direct current (DC) voltage detection circuit 14, an output voltage compensation unit 15, a motor current detection circuit 16, and an analog-to-digital (A/D) converter 17.

The vector control unit 10 receives a command value for a rotation frequency (hereinafter referred to as a "rotation frequency command value ω_cmd") and a detection value (iu, iv, iw) of a motor current, and outputs a command value (vu, vv, vw) for the inverter output voltage based on vector control. The rotation frequency command value ω_cmd is a command value input from a host controller and is a command value indicating a rotation frequency (a rotation speed) per unit time of the motor M.

The estimated power calculation unit 11 calculates estimated power Power_ref which is an estimated value of electric power consumed by the motor M. The estimated power calculation unit 11 calculates the estimated power Power_ref of the motor on the basis of the rotation frequency command value ω_cmd, a detection value (id, iq) of the motor current, and a predefined motor constant.

More specifically, the estimated power calculation unit 11 calculates the estimated power Power_ref on the basis of the following Equation (1).

[Math. 1]

$$Power\_ref = \omega\_cmd \cdot (\alpha * iq) + \beta * (id^2 + iq^2) \qquad \cdots (1)$$

In Equation (1), "α" is a torque constant and "β" is a copper loss coefficient, both of which are motor constants. Also, "id" is a d-axis current component (a magnetic flux current component) of the motor current, and "iq" is a q-axis current component (a torque current component) of the motor current. The d-axis current component Id and the q-axis current component Iq are detection values of a two-phase motor current calculated in the process (vector control) of the vector control unit 10, and are calculated on the basis of a detection value (iu, iv, iw) of the three-phase motor current directly detected from the motor current detection circuit 16 (details thereof will be described below).

The detected power calculation unit 12 calculates detected power Power_sl which is a detection value of the power consumed by the motor M. The detected power calculation unit 12 calculates detected power of the motor M on the basis of the detection value (iu, iv, iw) of the motor current and a command value (vu, vv, vw) for the inverter output voltage.

More specifically, the detected power calculation unit 12 calculates the detected power Power_sl on the basis of the following Equation (2).
[Math. 2]

$$Power\_sl = (vd * id) + (vq * iq) \qquad \cdots (2)$$

In Equation (2), "vd" is a command value for a d-axis voltage component of the voltage to be applied to the motor M and "vq" is a command value for a q-axis voltage component of the voltage to be applied to the motor M. The command value vd for the d-axis voltage component and the command value vq for the q-axis voltage component are command values for the two-phase inverter output voltage calculated in the process of the vector control unit 10 and are command values for a voltage which are bases of the command value (vu, vv, vw) for the three-phase inverter output voltage to be directly output to the motor M.

On the basis of a DC voltage Vdc detected by the DC voltage detection circuit 14, the duty output unit 13 converts the command value (vu, w, vw) for the inverter output voltage calculated by the vector control unit 10 into a duty command value (duty_u, duty_v, duty_w) based on the PWM control.

The DC voltage detection circuit 14 detects a DC voltage Vdc output from a DC power supply (a converter) (not illustrated) and outputs a detection result to the duty output unit 13.

The output voltage compensation unit 15 adjusts a phase of the inverter output voltage on the basis of a phase adjustment ratio γ (γ=Power_sl/Power_ref) [%] which is the ratio of the detected power Power_sl to the estimated power Power_ref. Details of the function of the output voltage compensation unit 15 will be described below.

The motor current detection circuit 16 detects a three-phase AC current (a motor current) flowing through the motor M. The motor current detected by the motor current detection circuit 16 is input as the detection value (iu, iv, iw) of the motor current to the vector control unit 10 through the A/D converter 17.

(Functional configuration of vector control unit)

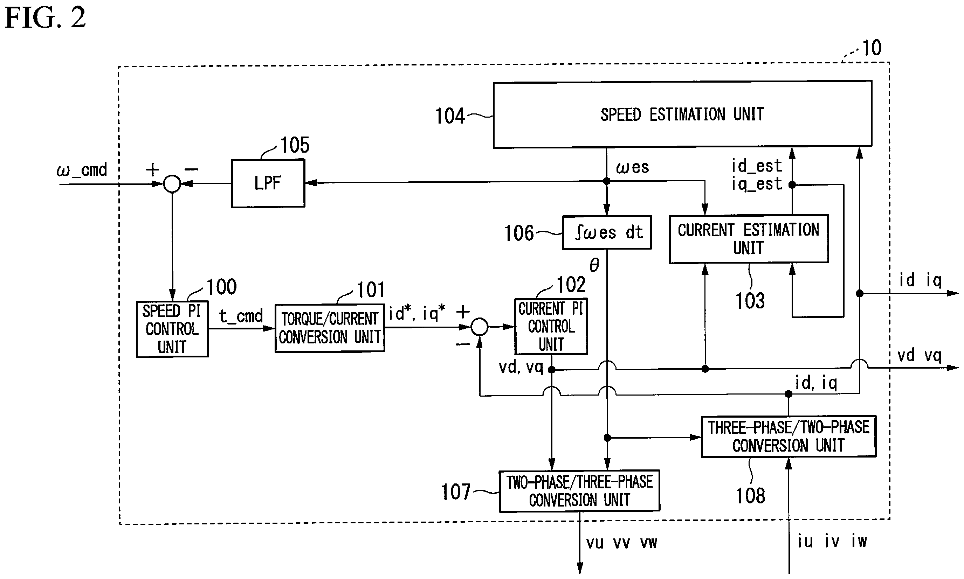

Fig. 2 is a diagram illustrating a functional configuration of the vector control unit according to the first embodiment.

The vector control unit 10 according to the first embodiment performs vector control based on a model reference adaptive system theory (hereinafter also referred to as "MRAS full vector control").

As illustrated in Fig. 2, the vector control unit 10 includes a speed proportional integral (PI) control unit 100, a torque/current conversion unit 101, a current PI control unit 102, a current estimation unit 103, a speed estimation unit 104, a low-pass filter (LPF) 105, an axis position estimation unit 106, a two-phase/three-phase conversion unit 107, and a three-phase/two-phase conversion unit 108.

The speed PI control unit 100 performs PI control so that a rotation frequency estimated by the speed estimation unit 104 (an estimated rotation frequency value ωes) matches a rotation frequency command value ω_cmd input from a host. Specifically, the speed PI control unit 100 outputs a torque command value t_cmd corresponding to a deviation between the rotation frequency command value ω_cmd and the estimated rotation frequency value ωes.

The torque/current conversion unit 101 converts the torque command value t_cmd input from the speed PI control unit 100 into a motor current command value (id*, iq*). Here, the motor current command value (id*, iq*) includes components of the motor current to be supplied to the motor M in order to achieve the torque indicated by the torque command value t_cmd.

The current PI control unit 102 performs PI control so that the detection value (id, iq) of the motor current matches the motor current command value (id*, iq*). Specifically, the current PI control unit 102 outputs the command value (vd, vq) for the inverter output voltage according to the deviation between the rotation frequency command value ω_cmd and the estimated rotation frequency value ωes.

The current estimation unit 103 receives the command value (vd, vq) for the inverter output voltage, performs current estimation based on a Runge-Kutta method, and outputs an estimated value (id_est, iq_est) of the motor current.

The speed estimation unit 104 receives the estimated value (id_est, iq_est) of the motor current estimated by the current estimation unit 103 and the detection value (id, iq) of the motor current and outputs the estimated rotation frequency value ωes on the basis of a deviation therebetween (see Japanese Patent No. 5422435 for details of the functions of the current estimation unit 103 and the speed estimation unit 104 based on the MRAS full vector control).

The LPF 105 removes a high-frequency component of the estimated rotation frequency value ωes in order to secure the stability of feedback control (PI control).

The axis position estimation unit 106 integrates the estimated rotation frequency value ωes calculated by the speed estimation unit 104 and outputs a phase θ that is an estimated value of the motor axis position.

On the basis of the motor axis position (the phase θ) estimated by the axis position estimation unit 106, the two-phase/three-phase converting unit 107 converts the command value (vd, vq) for the two-phase inverter output voltage into a command value (vu, vv, vw) for the three-phase inverter output voltage.

On the basis of the motor axis position (the phase θ) estimated by the axis position estimation unit 106, the three-phase/two-phase conversion unit 108 converts the detection value (iu, iv, iw) of the three-phase motor current into the detection value (id, iq) of the two-phase motor current.

Also, the vector control executed by the vector control unit 10 is not limited to the "MRAS full vector control" described above. In other embodiments, other generally known sensorless vector control may be used.

(Function of output voltage compensation unit)

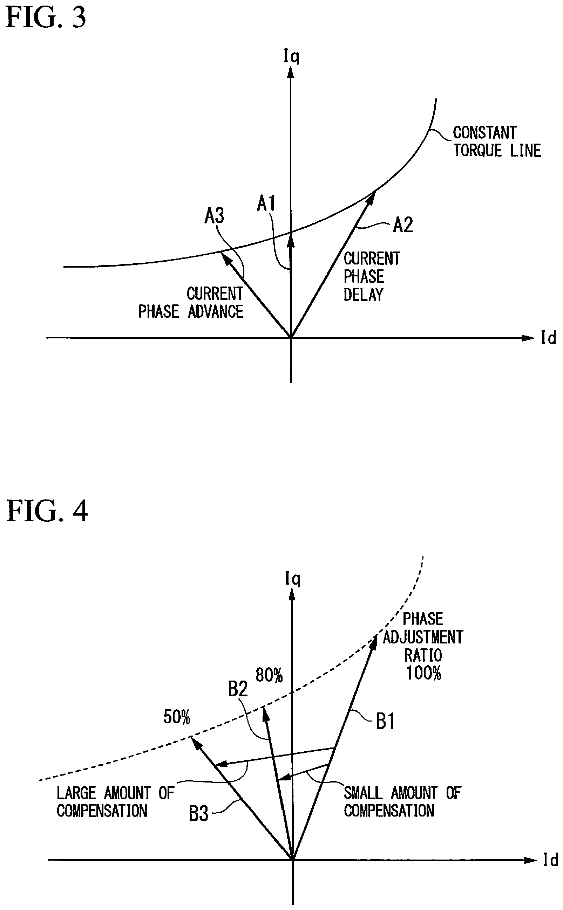

Figs. 3 and 4 are a first diagram and a second diagram illustrating the function of the output voltage compensation unit according to the first embodiment.

The case in which the estimated power calculation unit 11 and the detected power calculation unit 12 calculate the estimated power Power_ref and the detected power Power_sl on the basis of Equations (1) and (2), respectively, has been described. Here, when the actual motor axis position deviates from the motor axis position (the phase θ) estimated by the CPU (the motor control device 1), the estimated power Power_ref and the detected power Power_sl show different changes, respectively, in accordance with a change in an amount of deviation of the axis position.

More specifically, the estimated power Power_ref and the detected power Power_sl are calculation results on the CPU (the motor control device 1), and the estimated power Power_ref is particularly a calculated value based on motor constants (fixed values) referred to as a torque coefficient α and a copper loss coefficient β. Also, because the current contributing to the torque is mainly the q-axis current component Iq, the estimated power Power_ref is calculated as having a dominant contribution from the q-axis current component Iq (see Equation (1)).

Meanwhile, the detection value iq of the q-axis current component is calculated by the three-phase/two-phase conversion unit 108 (Fig. 2) on the basis of a q-axis position recognized by the CPU (the motor control device 1) (that is, the estimated value (the phase θ) of the motor axis position estimated by the axis position estimation unit 106). Then, if the actual motor axis position deviates from the estimated value (the phase θ), the phase of the q-axis current component Iq deviates from the actual q-axis although it is recognized as the q-axis current component Iq on the CPU (the motor control device 1).

Thus, if an axis deviation occurs, it is assumed that there is a difference (non-matching) between the estimated power Power_ref in which only the q-axis current component Iq dominantly contributes thereto and the detected power Power_sl in which the q-axis current component Iq does not dominantly contribute thereto.

Here, when an axis deviation (in particular, falling behind of the motor axis position) occurs, how the relation (the phase adjustment ratio γ) between the estimated power Power_ref and the detected power Power_sl varies is analyzed in detail.

In the current vector coordinates illustrated in Fig. 3, a general constant torque line is shown. Fig. 3 illustrates the phase and magnitude of the current necessary for generating a constant torque on the basis of the constant torque line.

In Fig. 3, a current vector A1 is a motor current when the d-axis current component Id is zero (Id=0). When the position of the motor axis position is behind on the basis of the state in which it is operating with the current vector A1, the phase of the motor current is delayed in accordance with falling behind of the motor axis position like the current vector A2 (a tilt toward the +Id axis side). Then, as illustrated in Fig. 3, the motor current necessary for obtaining a constant torque increases.

On the other hand, when the motor axis position is advanced from when it is operating with the current vector A1, the phase of the motor current advances in accordance with the advance of the motor axis position like the current vector A3 (a tilt toward the -Id axis side). Here, the current vector A3 indicates the state of the minimum current control in which the motor current necessary for obtaining a constant torque is minimized.

In this manner, if the motor current increases or decreases in accordance with the deviation of the motor axis position, the magnitude of the command value (vd, vq) for the inverter output voltage also increases/decreases in accordance therewith. Then, the motor current and the inverter output voltage increase when the phase is delayed from the phase (the current vector A3) of the motor current subjected to the minimum current control. In this manner, if the motor current and the inverter output voltage change, only the q-axis current component Iq of the estimated power Power_ref predominantly contributes to variation, whereas the command value vd for the d-axis voltage component and the command value vq for the q-axis voltage component also contribute to an increase/decrease in addition to the d-axis current component Id and the q-axis current component Iq of the detected power Power_sl. Thus, an amount of change for the motor axis position (the deviation of the current phase) in the detected power Power_sl is greater than that of the estimated power Power_ref. In other words, in the detected power Power_sl, sensitivity is high with respect to the motor axis position (the deviation of the current phase).

By utilizing this characteristic, it is possible to ascertain a change in the axis position (a current phase) of the motor through a change in the ratio of the detected power Power_sl to the estimated power Power_ref (the phase adjustment ratio γ). Specifically, when the motor axis position (the current phase) is behind (delayed) from the state close to the minimum current control, the detected power Power_sl is increased more than the estimated power Power_ref, so the phase adjustment ratio γ increases.

Also, when a torque coefficient α or a copper loss coefficient β used for the calculation of the estimated power Power_ref ideally matches a real value, the phase adjustment ratio γ becomes 100% in the minimum current control. However, if the actual motor axis position deviates from the estimated position, because the q axis recognized (estimated) by the CPU (the motor control device 1) deviates from the actual q-axis of the motor M, the q-axis current component Iq detected by the CPU actually includes a component (the d-axis current component Id) other than the component contributing to the torque. Thus, the apparent torque coefficient α varies due to excitation by the d-axis current component (not recognized by the CPU), and the torque calculation does not match the actual calculation.

Then, although the phase adjustment ratio γ is ideally close to the minimum current control at 100%, it is unknown what percentage is close to the minimum current control when the axis deviation occurs. Likewise, even when the phase adjustment ratio γ is 100%, it is impossible to specify an absolute motor axis position. It is only possible to ascertain whether the motor axis position is relatively in front of or behind an indefinite position according to an increase/decrease of the phase adjustment ratio γ.

Fig. 4 illustrates a relationship between a degree of an amount of compensation for the phase of the inverter output voltage and the phase adjustment ratio γ. Here, the "amount of compensation" is a parameter indicating the extent to which the output voltage compensation unit 15 delays the phase of the inverter output voltage.

As described above, the actual motor axis position deviates from the estimated value (the phase 0), so that the position where the phase adjustment ratio γ, which is the ratio between the estimated power and the detected power, becomes 100% varies according to a condition and it is impossible to ascertain the phase of the absolute motor current (the motor axis position).

Here, for example, when the phase adjustment ratio γ is 100%, the motor current is assumed to be at the position of the current vector B1 of Fig. 4 (that is, a state in which the motor axis position is behind the assumed position). In this state, if the output voltage compensation unit 15 intentionally delays the phase of the command value (vd, vq) for the inverter output voltage, the phase of the command value (vd, vq) for the inverter output voltage approaches the delayed phase of the motor current. That is, the current vector moves in a direction in which the delay of the phase of the motor current is eliminated.

For example, when the output voltage compensation unit 15 delays the phase of the command value (vd, vq) for the inverter output voltage by a certain predetermined amount of compensation from a state in which the motor current is the current vector B1 (a state of the phase adjustment ratio γ=100%), the phase of the current vector B1 is relatively further advanced and the current vector B1 moves to the current vector B2. In this case, the phase adjustment ratio γ decreases from 100% and becomes, for example, 80%.

Also, when the output voltage compensation unit 15 further delays the phase of the command value (vd, vq) for the inverter output voltage by a predetermined amount of compensation from a state in which the motor current is the current vector B2 (a state of the phase adjustment ratio γ=80%), the phase of the current vector B2 is relatively further advanced and the current vector B2 moves to the current vector B3 in the state of minimum current control. In this case, the phase adjustment ratio γ further decreases, and, becomes, for example, 50% (a minimum value).

As described above, it is unclear whether or not the axis deviation occurs, and how much the axis deviation has occurred, regardless of the percentage of the phase adjustment ratio γ. However, if the extent of the axis deviation does not reach a level at which a malfunction such as a current distortion, an overcurrent abnormality, a stepping out, or the like occur and if control is performed so that the degree of the axis deviation is always maintained during the driving of the motor M, it is possible to avoid the above-mentioned malfunction caused by further increasing the axis deviation.

Therefore, for each of the motor M and the motor control device 1, the motor axis position at which the phase adjustment ratio γ becomes 100% (or another specific value) is distinguished through a preliminary test operation, simulation and the like. Then, on the premise that the determined motor axis position will fall within a range in which no malfunction such as a current distortion, an overcurrent abnormality, a stepping out, or the like occurs, the phase adjustment ratio γ corresponding to the motor axis position is determined as a "target value γ_t." The target value γ_t determined as described above is recorded in the CPU (the motor control device 1), and the amount of compensation for the phase of the command value (vd, vq) for the inverter output voltage is set so that the sequentially calculated phase adjustment ratio γ matches the target value γ_t while the motor M is being actually driven.

(Processing flow of output voltage compensation unit)

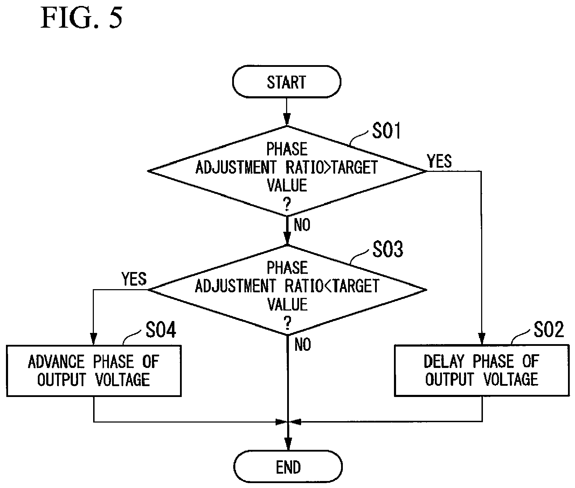

Fig. 5 is a diagram illustrating a processing flow of the output voltage compensation unit according to the first embodiment.

Hereinafter, a specific processing flow of the output voltage compensation unit 15 will be described with reference to Fig. 5.

While the motor M is being driven, the processing flow illustrated in Fig. 5 is iteratively executed in the output voltage compensation unit 15.

The output voltage compensation unit 15 receives the estimated power Power_ref calculated by the estimated power calculation unit 11 and the detected power Power_sl calculated by the detected power calculation unit 12, and calculates the phase adjustment ratio $\gamma$. Then, the output voltage compensation unit 15 determines whether or not the calculated phase adjustment ratio $\gamma$ is greater than a predefined target value $\gamma\_t$ (step S01).

If the phase adjustment ratio $\gamma$ is larger than the target value $\gamma\_t$ (step S01: YES), the output voltage compensation unit 15 performs a process of delaying the phase of the command value (vu, vv, vw) for the inverter output voltage by a predetermined amount of compensation h (step S02).

If the phase adjustment ratio $\gamma$ is not larger than the target value $\gamma\_t$ (step S01: NO), the output voltage compensation unit 15 determines whether or not the calculated phase adjustment ratio $\gamma$ is smaller than the target value $\gamma\_t$ (step S03).

If the phase adjustment ratio $\gamma$ is smaller than the target value $\gamma\_t$ (step S03: YES), the output voltage compensation unit 15 performs a process of advancing the phase of the command value (vu, vv, vw) for the inverter output voltage by a predetermined amount of compensation h (Step S04).

If the phase adjustment ratio $\gamma$ is not smaller than the target value $\gamma\_t$ (step S03: NO), it is determined that the phase adjustment ratio $\gamma$ matches the target value $\gamma\_t$, and no phase adjustment is performed.

(Phase adjustment function)

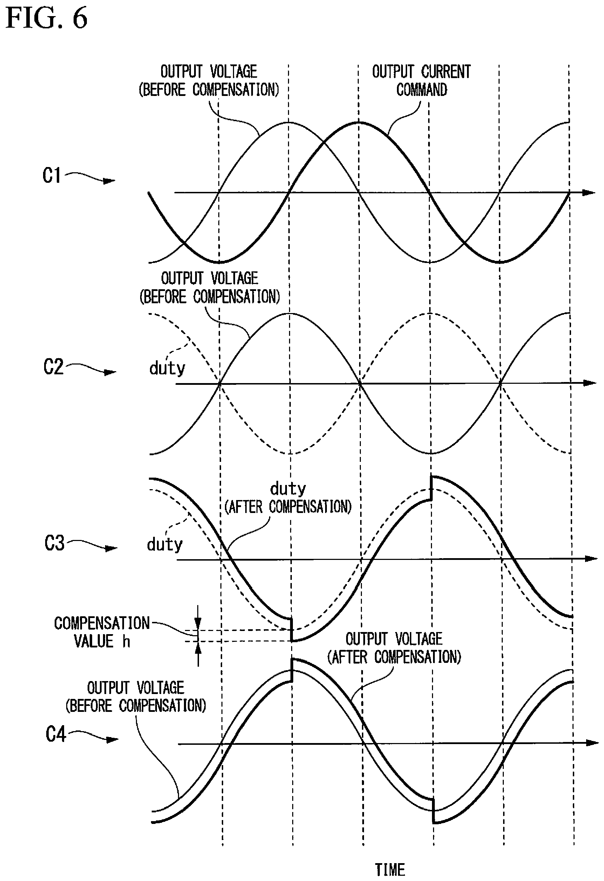

Fig. 6 is a diagram illustrating the phase adjustment process of the output voltage compensation unit according to the first embodiment.

A waveform C1 illustrated in Fig. 6 indicates an inverter output voltage and a motor current before compensation by the output voltage compensation unit 15 is performed. That is, the waveform C1 is a command value for the inverter output voltage and a command value for the motor current calculated by the vector control unit 10. Also, because an inductance component of the motor M is dominant, it is assumed that the phase of the motor current is 90° later than the phase of the inverter output voltage in Fig. 6. However, because the actual motor may include a slight resistance component and capacitance component, the present invention is not limited thereto.

A waveform C2 illustrated in Fig. 6 indicates a duty ratio before compensation output by the duty output unit 13 in accordance with the command value (before compensation) for the inverter output voltage. The output voltage compensation unit 15 receives an input of the duty ratio before compensation indicated by the waveform C2 from the duty output unit 13.

A waveform C3 illustrated in Fig. 6 is a waveform of the duty ratio after compensation output from the output voltage compensation unit 15 in accordance with the duty ratio before compensation. As indicated by the waveform C3, the output voltage compensation unit 15 performs addition or subtraction of a predetermined amount of compensation h (h> 0) for each half cycle with respect to the duty ratio before compensation. The output voltage compensation unit 15 outputs compensated duty ratios (duty_u $\pm$ h, duty_v $\pm$ h, duty_w $\pm$ h) obtained by adding and subtracting the amount of compensation h with respect to the duty ratio before compensation.

A waveform C4 illustrated in Fig. 6 is the waveform of the actual voltage that the inverter 2 outputs to the motor M (that is, the inverter output voltage after compensation). On the basis of the duty ratio (duty_u $\pm$ h, duty_v $\pm$ h, duty_w $\pm$ h) after compensation, the inverter 2 outputs the inverter output voltage after compensation increased or decreased by a predetermined amount of compensation at each half cycle.

As indicated by the waveform C4, the phase of the inverter output voltage after compensation is apparently later than that of the inverter output voltage before compensation.

In this manner, the output voltage compensation unit 15 delays the phase of the inverter output voltage by adding a predetermined amount of compensation (>0) to the command value for the inverter output voltage during a half-cycle period in which the inverter output voltage increases and subtracting the predetermined amount of compensation (>0) from the command value for the inverter output voltage during a half-cycle period in which the inverter output voltage decreases.

On the contrary, the output voltage compensation unit 15 advances the phase of the inverter output voltage by subtracting a predetermined amount of compensation from the command value for the inverter output voltage during a half-cycle period in which the inverter output voltage increases and adding the predetermined amount of compensation to the command value for the inverter output voltage during a half-cycle period in which the inverter output voltage decreases.

(Actions/effects)

As described above, the motor control device 1 according to the first embodiment includes a vector control unit 10 configured to receive a command value for a rotation frequency (a rotation frequency command value ω_cmd) and a detection value of a motor current and output a command value for the inverter output voltage on the basis of vector control. Also, the motor control device 1 includes a detected power calculation unit 12 configured to calculate the detected power Power_sl of the motor M on the basis of the detection value (id, iq) of the motor current and the command value (vd, vq) for the inverter output voltage. Further, the motor control device 1 is provided with an estimated power calculation unit 11 configured to calculate estimated power Power_ref of the motor M on the basis of a command value for the rotation frequency, a detection value of the motor current, and a predefined motor constant ($\alpha$, $\beta$). Further, the motor control device 1 is provided with an output voltage compensation unit 15 configured to adjust the phase of the inverter output voltage on the basis of the ratio of the detected power Power_sl to the estimated power Power_ref (the phase adjustment ratio $\gamma$).

Here, the phase adjustment ratio $\gamma$ is characterized in that it varies in accordance with a change in an amount of deviation of the motor axis position (an amount of deviation between an actual motor axis position and an estimated value thereof). Therefore, by adopting the above configuration, the output voltage compensation unit 15 can ascertain a change in an amount of deviation of the motor axis position on the basis of the phase adjustment ratio $\gamma$. Thereby, the output voltage compensation unit 15 adjusts the phase of the inverter output voltage in accordance with an amount of deviation of the motor axis position and appropriately compensates for the deviation of the motor axis position. Thereby, it is possible to minimize a malfunction such as a current distortion, an overcurrent abnormality, a stepping out, or the like.

Also, the output voltage compensation unit 15 according to the first embodiment adjusts the phase of the inverter output voltage so that the phase adjustment ratio $\gamma$ matches the predetermined target value $\gamma$_t.

Thereby, because the phase adjustment ratio $\gamma$ is constantly maintained at the target value $\gamma$_t, it is possible to prevent the motor axis position from being changed.

Also, in another embodiment, the present invention is not limited to a form in which the phase adjustment ratio $\gamma$ matches the target value $\gamma$_t. For example, the output voltage compensation unit 15 according to the other embodiment may have a form in which a target range of the phase adjustment ratio $\gamma$ (for example, 40% to 100% or the like) at which no malfunction such as an overcurrent, a stepping out, or the like occurs is ascertained according to a preliminary test, simulation and the like and the phase of the inverter output voltage is adjusted so that the phase adjustment ratio $\gamma$ falls or rises, shifts, adjusts, aligns, etc. within the target range.

Also, the output voltage compensation unit 15 delays the phase by adding a predetermined amount of compensation to the command value for the inverter output voltage during a half-cycle period in which the inverter output voltage increases and subtracting an amount of compensation from the command value for the inverter output voltage during a half-cycle period in which the inverter output voltage decreases.

Thereby, it is possible to simply delay the phase just by adding the amount of compensation to the command value for the inverter output voltage or subtracting the amount of compensation from the command value for the inverter output voltage.

Also, in another embodiment, the mode of the output voltage compensation unit 15 is not limited to the above. For example, in the output voltage compensation unit 15 according to another embodiment, the vector control unit 10 may be configured to receive the phase adjustment ratio $\gamma$ and directly adjust the phase of the command value (vu, vv , vw) for the inverter output voltage on the basis of the input phase adjustment ratio $\gamma$.

<Second embodiment>

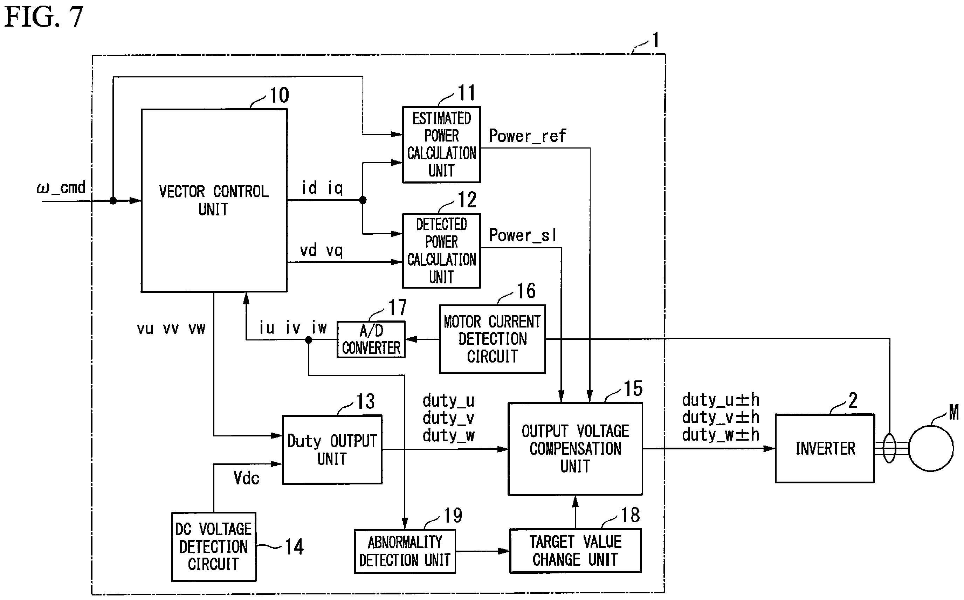

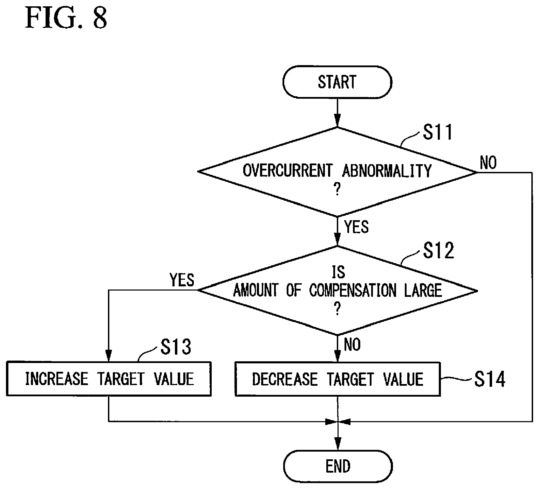

Next, a motor control device according to a second embodiment will be described with reference to Figs. 7 and 8.

(Overall configuration of motor control device)

Fig. 7 is a diagram illustrating the overall configuration of a motor control device according to the second embodiment.

As illustrated in Fig. 7, a motor control device 1 according to the second embodiment further includes a target value change unit 18 and an abnormality detection unit 19.

The target value change unit 18 changes a target value $\gamma$_t of a phase adjustment ratio $\gamma$ when a predetermined condition is satisfied.

The abnormality detection unit 19 monitors a detection value (iu, iv, iw) of a motor current acquired via a motor current detection circuit 16 and an A/D converter 17 and provides a notification of occurrence of an overcurrent abnormality. Specifically, the abnormality detection unit 19 has a predefined overcurrent determination threshold value, and performs the notification by determining that an overcurrent abnormality has occurred when the detection value of the motor current exceeds the overcurrent determination threshold value.

(Process flow of target value change unit)

Fig. 8 is a diagram illustrating a processing flow of the target value change unit according to the second embodiment.

Hereinafter, a specific processing flow of the target value change unit 18 will be described with reference to Fig. 8.

The processing flow illustrated in Fig. 8 is iteratively executed by the target value change unit 18 while a motor M is being driven.

The target value change unit 18 determines whether or not an overcurrent abnormality has occurred through the abnormality detection unit 19 (step S11).

If no overcurrent abnormality has occurred (step S11: NO), the target value change unit 18 terminates the process without changing the target value $\gamma\_t$.

If an overcurrent has occurred (step S11: YES), the target value change unit 18 determines whether or not a current amount of compensation is large (step S12). Specifically, the target value change unit 18 determines whether or not the ratio of the amount of compensation h to a duty command value (duty_u, duty_v, duty_w) output from the duty output unit 13 exceeds a predetermined value (for example, 50%).

If the amount of compensation h when an overcurrent abnormality occurs is large (step S12: YES), it is assumed that the phase of the inverter output voltage is greatly delayed in order to make the phase adjustment ratio $\gamma$ match the target value $\gamma\_t$ and consequently an abnormality occurs. In this case, there is a high likelihood that the phase of the motor current will be excessively earlier than the phase of the motor current (the current vector A3 in Fig. 3) in the minimum current control. Therefore, in this case, the target value $\gamma\_t$ is set to be larger than the existing value (step S13).

On the other hand, if the compensation amount h when an overcurrent abnormality occurs is small (step S12: NO), it is assumed that an overcurrent abnormality has occurred as a result of slightly delaying the phase of the inverter output voltage to make the phase adjustment ratio $\gamma$ match the target value $\gamma\_t$. In this case, there is a high likelihood that the phase of the motor current will be excessively later than the phase of the motor current in the minimum current control (the current vector A3 in Fig. 3). Therefore, in this case, the target value $\gamma\_t$ is set to be smaller than the existing value (step S14).

(Actions/effects)

As described above, the motor control device 1 according to the second embodiment further includes the target value change unit 18 configured to change the target value $\gamma\_t$.

Here, whether or not the target value $\gamma\_t$ of the phase adjustment ratio $\gamma$ is appropriate depends on environmental conditions or operating conditions. For example, even if the target value $\gamma\_t$ is appropriately set according to a preliminary test operation or the like, a malfunction such as an overcurrent abnormality, a stepping out, or the like may also occur at a preset fixed value (the target value $\gamma\_t$) according to an operating environment temperature, a load condition of the motor M (a light-load high-speed operation, a heavy-load low-speed operation, or the like).

Therefore, as in the motor control device 1 according to the second embodiment, it is possible to automatically change the target value $\gamma\_t$, thereby minimizing the occurrence of a malfunction even if the environmental conditions and the operating conditions change.

Also, the motor control device 1 according to the second embodiment further includes the abnormality detection unit 19 configured to detect an overcurrent abnormality, and the target value change unit 18 configured to change the target value if an abnormality is detected by the abnormality detection unit 19.

Thereby, the target value $\gamma\_t$ is appropriately changed at a timing at which an overcurrent abnormality is detected.

Also, if an overcurrent abnormality is detected, the motor control device 1 according to the second embodiment changes the target value $\gamma\_t$ to a large value when the amount of compensation is large and changes the target value $\gamma\_t$ to a small value when the amount of compensation is small.

Thereby, because the target value $\gamma\_t$ is changed in a direction in which a stable operation is expected, it is possible to quickly escape from an abnormal state.

Also, the above-described embodiment is not an essential configuration in other embodiments. For example, the target value change unit 18 according to another embodiment may be a form in which it is determined whether or not it is possible to escape from an abnormal state when the target value $\gamma\_t$ is increased (or decreased), and the target value $\gamma\_t$ is changed in an opposite direction if it is not possible to escape from an abnormal state.

Also, a form of the abnormality detected by the abnormality detection unit 19 is not limited to the "overcurrent abnormality" and may be a malfunction such as a current distortion, a stepping out, or the like.

<Third embodiment>

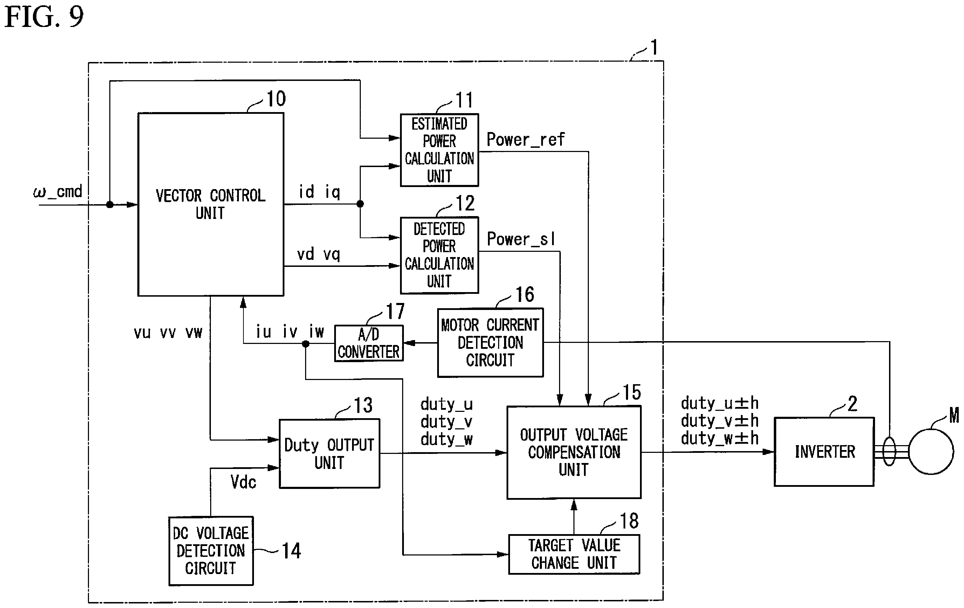

Next, a motor control device according to a third embodiment will be described with reference to Fig. 9.

Fig. 9 is a diagram illustrating the overall configuration of the motor control device according to the third embodiment.

As illustrated in Fig. 9, a motor control device 1 according to the third embodiment includes a target value change unit 18.

An operation form of the target value change unit 18 according to the third embodiment is different from that of the second embodiment.

Specifically, the target value change unit 18 according to the third embodiment acquires a detection value (iu, iv, iw) of a motor current acquired via a motor current detection circuit 16 and an A/D converter 17 and changes a target value $\gamma\_t$ so that the detection value of the motor current is minimized.

Specifically, while a motor M is being steadily driven, the target value change unit 18 changes the target value $\gamma\_t$ by a small amount and searches for the target value $\gamma\_t$ in which the detection value of the motor current is minimized.

Thus, a phase of the motor current (a motor axis position) is fixed to a phase at which the minimum current control is implemented, so that a malfunction such as a current distortion, an overcurrent abnormality, a stepping out, or the like due to an axis deviation can be further minimized.

Also, the motor current varies with a change in a load or the like in the motor M. Therefore, when the minimum value of the motor current is searched for, it is first necessary to determine whether or not the motor M is in a stable operation state (a state in which the motor current does not change due to an external factor).

Therefore, for example, the target value change unit 18 may be configured to monitor a rotation frequency command value $\omega\_cmd$ input from a host and search for the target value $\gamma\_t$ in which the detection value of the motor current is minimized during only a time period in which the rotation frequency is not changing.

It is also assumed that the load fluctuates due to interfering factors even if the rotation frequency does not change. Therefore, the target value change unit 18 may monitor the motor current for a fixed time and acquire the trend of a change such as "continuously increasing," "continuously decreasing," or the like. Then, the target value change unit 18 may be configured to search for the target value $\gamma\_t$ in which the detection value of the motor current is minimized during only a time period in which the motor current is constant.

Also, in the above-described embodiments, processes of various types of processing of the above-described motor control device 1 are stored in a computer-readable recording medium in the form of the program, and various types of processing described above are performed by the computer reading and executing this program. Here, the computer-readable recording medium refers to a magnetic disk, a magneto-optical disc, a CD-ROM, a DVD-ROM, a semiconductor memory, or the like. Also, a computer program may be distributed to a computer through a communication line, and the computer receiving the distributed computer program may execute the program.

Also, the above-described program may be a program for implementing some of the above-described functions. Further, the above-described program may be a program capable of implementing the above-described functions in combination with a program already recorded on the computer system, i.e., a so-called differential file (differential program). Further, the motor control device 1 may be constituted of one computer or constituted of a plurality of computers which are communicably connected.

While certain embodiments of the present invention have been described, these embodiments have been presented by way of example only, and are not intended to limit the scope of the invention. The novel embodiments described herein may be embodied in a variety of other forms, and various omissions, substitutions, and changes may be made without departing from the spirit of the invention. These embodiments and modifications thereof are included in the scope and spirit of the invention, and also included in the invention described in the scope of claims and the scope of equivalents thereof.

[Reference Signs List]

1 Motor control device
10 Vector control unit
11 Estimated power calculation unit
12 Detected power calculation unit
13 Duty output unit
14 DC voltage detection circuit
15 Output voltage compensation unit
16 Motor current detection circuit

17 A/D converter
18 Target value change unit
19 Abnormality detection unit
100 Speed PI control unit
101 Torque/current conversion unit
102 Current PI control unit
103 Current estimation unit
104 Speed estimation unit
105 LPF
106 Axis position estimation unit
107 Two-phase/three-phase conversion unit
108 Three-phase/two-phase conversion unit

**Claims**

1. A motor control device (1) for controlling a motor (M) through an inverter (2), the motor control device comprising:

   a vector control unit (10) configured to receive a command value for a rotation frequency and a detection value of a motor current and output a command value for an inverter output voltage based on vector control;
   a detected power calculation unit (12) configured to calculate detected power of the motor on the basis of the detection value of the motor current and the command value for the inverter output voltage;
   an estimated power calculation unit (11) configured to calculate estimated power of the motor on the basis of the command value for the rotation frequency, the detection value of the motor current, and a predefined motor constant;
   an output voltage compensation unit (15) configured to adjust a phase of the inverter output voltage so that a ratio of the detected power to the estimated power matches a predetermined target value; and
   a target value change unit (18) configured to change the target value.

2. The motor control device according to claim 1, further comprising:

   an abnormality detection unit (19) configured to detect an abnormality,
   wherein the target value change unit (18) is configured to change the target value if the abnormality detection unit detects the abnormality.

3. The motor control device according to claim 2, wherein the target value change unit (18) changes the target value to a large value if an amount of compensation indicating a degree to which a phase of the inverter output voltage is delayed in the output voltage compensation unit (15) is large when the abnormality is detected and changes the target value to a small value if the amount of compensation is small.

4. The motor control device according to any one of claims 1 to 3, wherein the target value change unit is configured to change the target value so that the detection value of the motor current is minimized.

5. A motor control method of controlling a motor (M) through an inverter (2), the motor control method comprising:

   a vector control step of receiving a command value for a rotation frequency and a detection value of a motor current and outputting a command value for an inverter output voltage based on vector control;
   a detected power calculation step of calculating detected power of the motor on the basis of the detection value of the motor current and the command value for the inverter output voltage;
   an estimated power calculation step of calculating estimated power of the motor on the basis of the command value for the rotation frequency, the detection value of the motor current, and a predefined motor constant;
   an output voltage compensation step of adjusting a phase of the inverter output voltage so that a ratio of the detected power to the estimated power matches a predetermined target value; and
   a target value change step of changing the target value.

6. A program for causing a computer of a motor control device (1) for controlling a motor (M) through an inverter (2) to function as:

a vector control unit configured to receive a command value for a rotation frequency and a detection value of a motor current and output a command value for an inverter output voltage based on vector control;

a detected power calculation unit configured to calculate detected power of the motor on the basis of the detection value of the motor current and the command value for the inverter output voltage;

an estimated power calculation unit configured to calculate estimated power of the motor on the basis of the command value for the rotation frequency, the detection value of the motor current, and a predefined motor constant;

an output voltage compensation unit configured to adjust a phase of the inverter output voltage so that a ratio of the detected power to the estimated power matches a predetermined target value; and

a target value change unit configured to change the target value.

7. A phase adjustment method of adjusting a phase of an inverter output voltage, the phase adjustment method comprising:

at least one of a step of delaying a phase by adding a predetermined amount of compensation to a command value for the inverter output voltage during a half-cycle period in which the inverter output voltage increases and subtracting the amount of compensation from the command value for the inverter output voltage during a half-cycle period in which the inverter output voltage decreases; and

a step of advancing a phase by subtracting a predetermined amount of compensation from a command value for the inverter output voltage during a half-cycle period in which the inverter output voltage increases and adding the amount of compensation to the command value for the inverter output voltage during a half-cycle period in which the inverter output voltage decreases.

FIG. 1

EP 3 331 155 A1

# FIG. 2

EP 3 331 155 A1

# FIG. 3

# FIG. 4

FIG. 5

```
                    ┌──────────┐
                    │  START   │
                    └────┬─────┘
                         │
                         ▼            S01
              ╱────────────────────────╲
            ╱          PHASE             ╲        YES
          ◁  ADJUSTMENT  RATIO>TARGET     ▷──────────┐
            ╲          VALUE             ╱           │
              ╲          ?              ╱            │
                ╲────────────────────╱              │
                         │ NO                        │
                         ▼            S03            │
              ╱────────────────────────╲            │
    YES     ╱          PHASE             ╲           │
  ┌────────◁  ADJUSTMENT  RATIO<TARGET    ▷          │
  │         ╲          VALUE             ╱           │
  │           ╲          ?              ╱            │
  │             ╲────────────────────╱              │
  │                      │ NO                        │
  ▼    S04                │                   S02    ▼
┌──────────────────┐     │          ┌──────────────────┐
│ ADVANCE  PHASE OF│     │          │  DELAY  PHASE OF │
│ OUTPUT  VOLTAGE  │     │          │ OUTPUT  VOLTAGE  │
└────────┬─────────┘     │          └────────┬─────────┘
         │               │                   │
         └───────────────┼───────────────────┘
                         ▼
                    ┌──────────┐
                    │   END    │
                    └──────────┘
```

# FIG. 6

OUTPUT VOLTAGE
(BEFORE COMPENSATION)

OUTPUT CURRENT
COMMAND

C1

OUTPUT VOLTAGE
(BEFORE COMPENSATION)

C2    duty

duty
(AFTER COMPENSATION)

C3    duty

COMPENSATION
VALUE h

OUTPUT VOLTAGE
(AFTER COMPENSATION)

OUTPUT VOLTAGE
(BEFORE COMPENSATION)

C4

TIME

# FIG. 7

FIG. 8

## FIG. 9

EP 3 331 155 A1

Europäisches
Patentamt

European
Patent Office

Office européen
des brevets

# EUROPEAN SEARCH REPORT

**Application Number**

EP 17 20 4112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/085508 A1 (FUJITSUNA MASAMI [JP] ET AL) 19 April 2007 (2007-04-19) * the whole document * | 1-7 | INV. H02P21/26 |
| A | US 2004/249596 A1 (HO EDDY YING YIN [US]) 9 December 2004 (2004-12-09) * the whole document * | 1-7 | |
| A | US 2005/218862 A1 (HUGGETT COLIN [US] ET AL) 6 October 2005 (2005-10-06) * the whole document * | 1-7 | |
| A | EP 0 417 805 A1 (HITACHI LTD [JP]) 20 March 1991 (1991-03-20) * figure 7 * | 1-7 | |
| A | EP 1 237 274 A1 (MATSUSHITA ELECTRIC IND CO LTD [JP]) 4 September 2002 (2002-09-04) * paragraph [0044]; figure 6 * | 1-7 | |
| A | US 2005/104552 A1 (ARAI YASUHIRO [JP] ET AL) 19 May 2005 (2005-05-19) * paragraphs [0025], [0109]; figure 20 * | 1-7 | TECHNICAL FIELDS SEARCHED (IPC) H02P |

The present search report has been drawn up for all claims

| Place of search | Date of completion of the search | Examiner |
|---|---|---|
| Munich | 23 March 2018 | Schneider, Gernot |

EPO FORM 1503 03.82 (P04C01)

## ANNEX TO THE EUROPEAN SEARCH REPORT
## ON EUROPEAN PATENT APPLICATION NO.

EP 17 20 4112

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2018

| Patent document cited in search report | | Publication date | Patent family member(s) | | Publication date |
|---|---|---|---|---|---|
| US 2007085508 | A1 | 19-04-2007 | CN | 1949654 A | 18-04-2007 |
| | | | DE 102006047206 A1 | | 10-05-2007 |
| | | | JP | 4674525 B2 | 20-04-2011 |
| | | | JP | 2007110837 A | 26-04-2007 |
| | | | US | 2007085508 A1 | 19-04-2007 |
| US 2004249596 | A1 | 09-12-2004 | NONE | | |
| US 2005218862 | A1 | 06-10-2005 | EP | 1730836 A2 | 13-12-2006 |
| | | | US | 2005218862 A1 | 06-10-2005 |
| | | | WO | 2005099076 A2 | 20-10-2005 |
| EP 0417805 | A1 | 20-03-1991 | DE | 69019645 D1 | 29-06-1995 |
| | | | DE | 69019645 T2 | 21-09-1995 |
| | | | EP | 0417805 A1 | 20-03-1991 |
| | | | US | 5184057 A | 02-02-1993 |
| EP 1237274 | A1 | 04-09-2002 | CN | 1374752 A | 16-10-2002 |
| | | | DE | 60200431 D1 | 09-06-2004 |
| | | | DE | 60200431 T2 | 07-04-2005 |
| | | | DE | 60224021 T2 | 04-12-2008 |
| | | | EP | 1237274 A1 | 04-09-2002 |
| | | | EP | 1378990 A2 | 07-01-2004 |
| | | | KR | 20020070890 A | 11-09-2002 |
| | | | US | 2002149342 A1 | 17-10-2002 |
| US 2005104552 | A1 | 19-05-2005 | CN | 1578103 A | 09-02-2005 |
| | | | KR | 20050011711 A | 29-01-2005 |
| | | | TW | I343171 B | 01-06-2011 |
| | | | US | 2005104552 A1 | 19-05-2005 |

EPO FORM P0459

For more details about this annex : see Official Journal of the European Patent Office, No. 12/82

**EP 3 331 155 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007312521 A
- JP 5422435 B